# EUROPÄISCHE PATENTSCHRIFT

(11) **EP 0 922 597 B1**
(45) Veröffentlichungstag und Bekanntmachung des Hinweises auf die Patenterteilung: **27.06.2001**
(21) Anmeldenummer: 98119553.0
(22) Anmeldetag: 16.10.1998
(51) Int. Cl.: B60J 7/14

(54) **Kraftfahrzeug mit einer versenkbaren Dachkonstruktion**
Vehicle provided with a retractable roof structure
Véhicule avec structure de toit rétractable

(30) Priorität: 12.12.1997 DE 19755254
(43) Veröffentlichungstag der Anmeldung: 16.06.1999
(73) Patentinhaber: Dr.Ing. h.c.F. Porsche Aktiengesellschaft, 70435 Stuttgart (DE)
(72) Erfinder: Beierl, Dominik, 70825 Korntal-Münchingen (DE)

(56) Entgegenhaltungen:
- EP-A- 0 764 553
- DE-A- 3 903 358
- DE-C- 4 435 222

## Beschreibung

Die Erfindung bezieht sich auf ein Kraftfahrzeug mit einer versenkbaren Dachkonstruktion gemäß dem Oberbegriff des Patentanspruchs 1.

Aus der DE 43 20 468 C1 geht ein Kraftfahrzeug mit einer versenkbaren Dachkonstruktion hervor, das ein Dachteil über den Insassen und ein eine Heckscheibe aufweisendes Heckteil umfaßt, wobei die Dachkonstruktion von einer einen Fahrgastraum vollständig überdeckenden Schließstellung in eine versenkte heckseitige Ablagestellung bewegbar ist, in der das Dachteil und das Heckteil zusammengeklappt in einem nach oben hin durch einen schwenkbaren Deckel verschlossenen heckseitigen Aufnahmeraum aufgenommen sind. Bei dieser Anordnung sind das Dachteil und das Heckteil über eine querverlaufende Drehachse schwenkbeweglich miteinander verbunden und außerdem ist das Heckteil um eine fahrzeugfeste Heckschwenkachse schwenkbar. In der heckseitigen Ablagestellung ist das Dachteil auf das darunterliegende Heckteil geklappt. Diese Dachkonstruktion benötigt in der heckseitigen Ablagestellung relativ viel Bauraum im Heckbereich des Kraftfahrzeuges. Darüber hinaus kann mit dieser Dachkonstruktion das Fahrzeug nur in zwei unterschiedlichen Stellungen, nämlich einer Schließstellung und einer Ablagestellung, genutzt werden.

Aufgabe der Erfindung ist es, eine Dachkonstruktion der eingangs genannten Gattung so weiterzubilden, daß die Dachkonstruktion in der heckseitigen Ablagestellung einen verringerten Bauraum beansprucht und daß die Dachkonstruktion zudem neben der Schließ- und der Ablagestellung noch in weiteren Stellungen nutzbar ist.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß die abgelegte Dachkonstruktion - insbesondere in Höhenrichtung gesehen - einen verringerten Bauraum innerhalb des Aufnahmeraumes beansprucht, da in der Ablagestellung das nach vorne geschobene Mittelteil des Heckteils praktisch innerhalb des Dachteils aufgenommen ist und somit die Bombierungen von Dachteil und Mittelteil gleichgerichtet zueinander verlaufen. Zudem ist diese Dachkonstruktion außer in der Schließstellung und der Ablagestellung noch in zwei weiteren zusätzlichen Stellungen nutzbar, nämlich einer Belüftungsstellung mit nach innen geklapptem Mittelteil und einer Stellung mit großflächiger Hecköffnung, in der das Mittelteil unter das vorgelagerte Dachteil geschoben wurde.

Insbesondere die zuletzt angeführte Stellung ist für südliche Länder vorteilhaft, da hier die direkte Sonneneinstrahlung auf den Kopf der Insassen vermieden wird und durch die großflächige Hecköffnung dennoch genügend Luft in das Kraftfahrzeug einströmen kann.

Als Kinematik zur Verlagerung der Dachkonstruktion eignet sich insbesondere eine Viergelenkanordnung, da durch diese das vordere Dachelement parallel zu sich selbst nach hinten in den Aufnahmeraum verlagerbar ist.

Die erfindungsgemäße Dachkonstruktion weist einen einfachen Aufbau auf und ist einfach und kostengünstig herstellbar. Mit einer derartigen Dachkonstruktion kann gegenüber einer Faltverdeckausbildung auf ein zusätzliches Hardtop verzichtet werden.

Ein Ausführungsbeispiel der Erfindung ist in den Zeichnungen dargestellt und wird im folgenden näher beschrieben.

Es zeigen
- Fig. 1: eine perspektivische Ansicht von schräg hinten auf einen Personenkraftwagen mit einer versenkbaren Dachkonstruktion in Schließstellung,

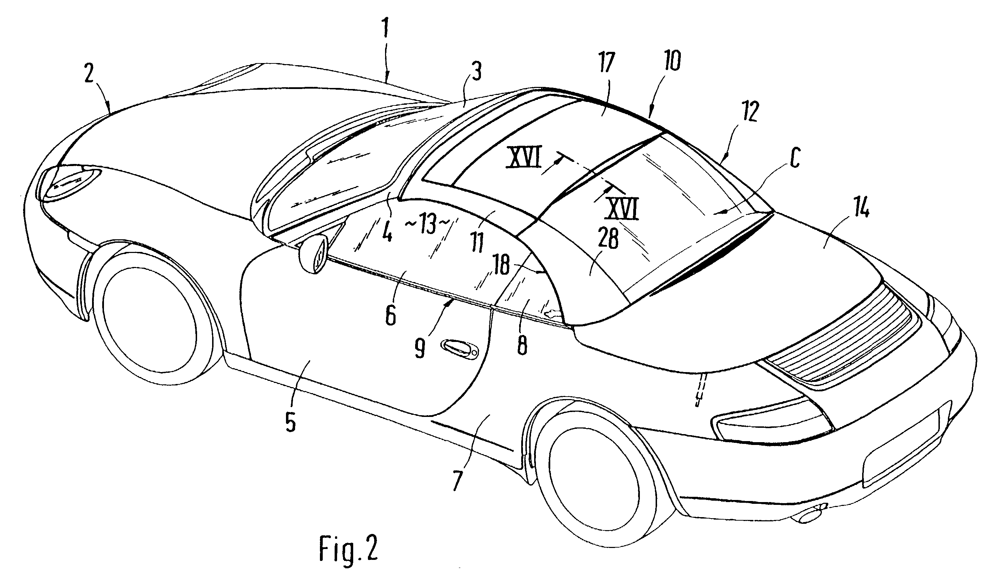

- Fig. 2: eine Ansicht ähnlich Fig. 1, wobei ein Mittelteil des Heckteils nach vorne unter das Dachteil der Dachkonstruktion geschoben ist,

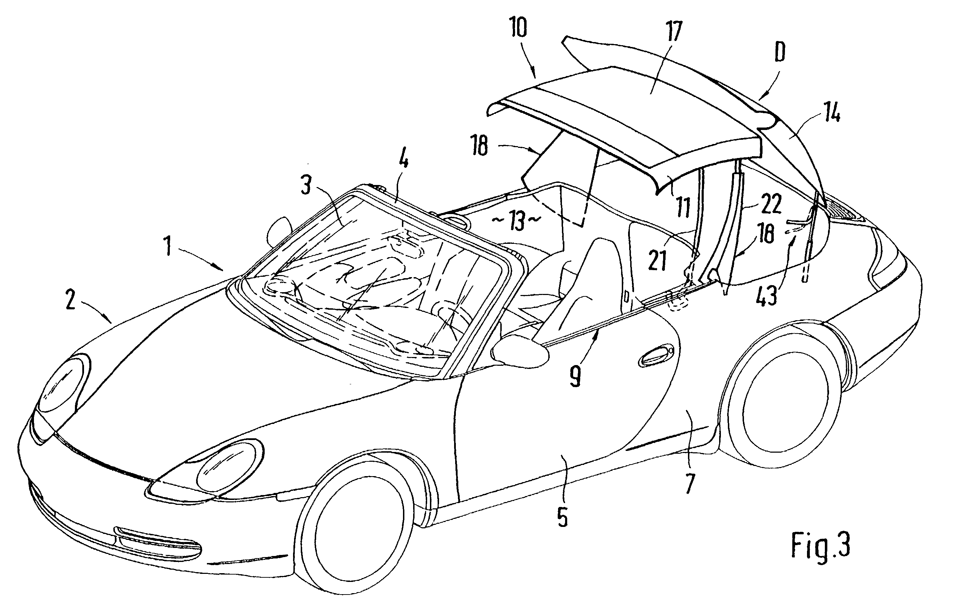

- Fig. 3: eine Ansicht von schräg vorne auf den Personenkraftwagen und die Dachkonstruktion, wobei die heckseitige Klappe geöffnet ist und das Dachteil gemeinsam mit dem angeschobenen Mittelteil nach hinten in den heckseitigen Aufnahmeraum verlagert wird,

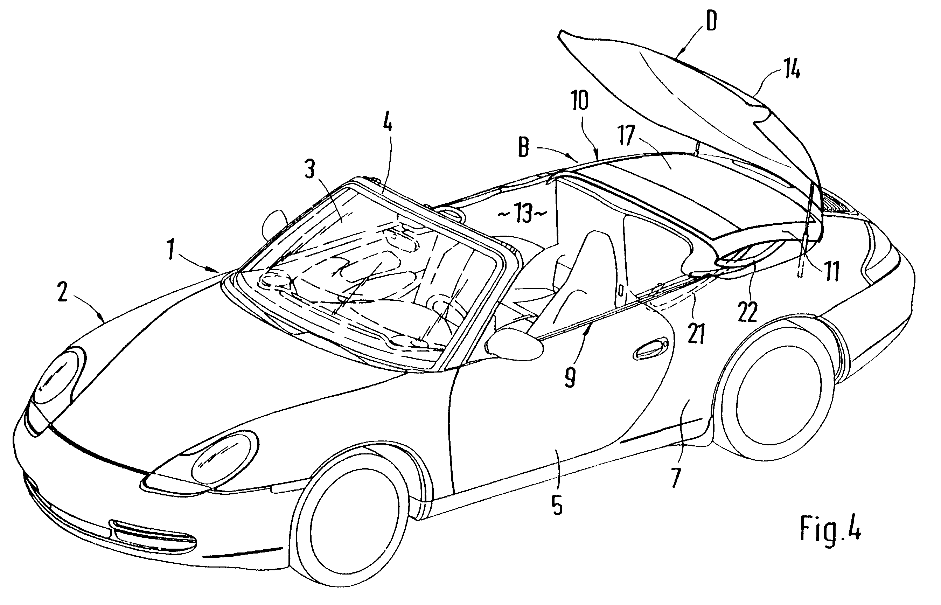

- Fig. 4: eine Ansicht ähnlich Fig. 3, wobei das Dachteil mit eingeschobenem Mittelteil bereits seine Ablagestellung einnimmt und der heckseitige Deckel noch geöffnet ist,

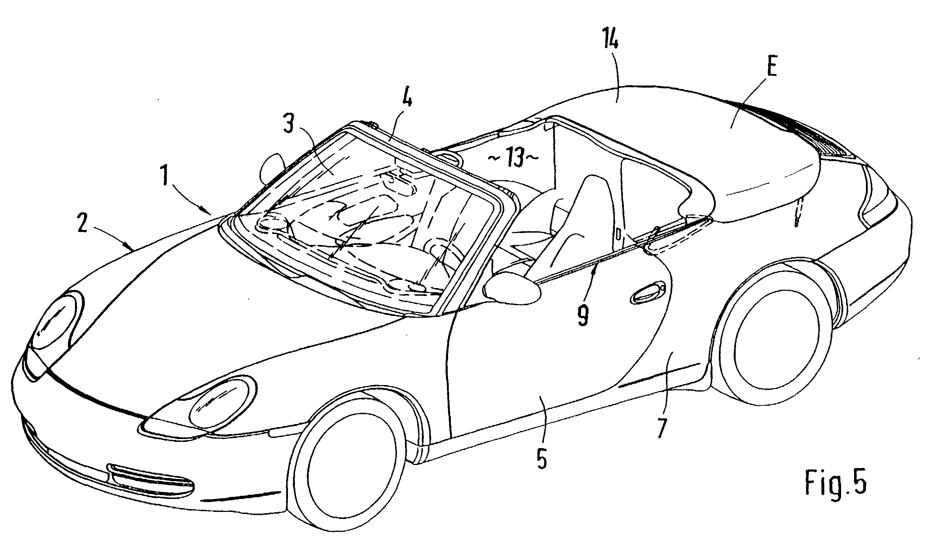

- Fig. 5: eine Ansicht ähnlich Fig. 4, jedoch mit geschlossenem heckseitigen Deckel,

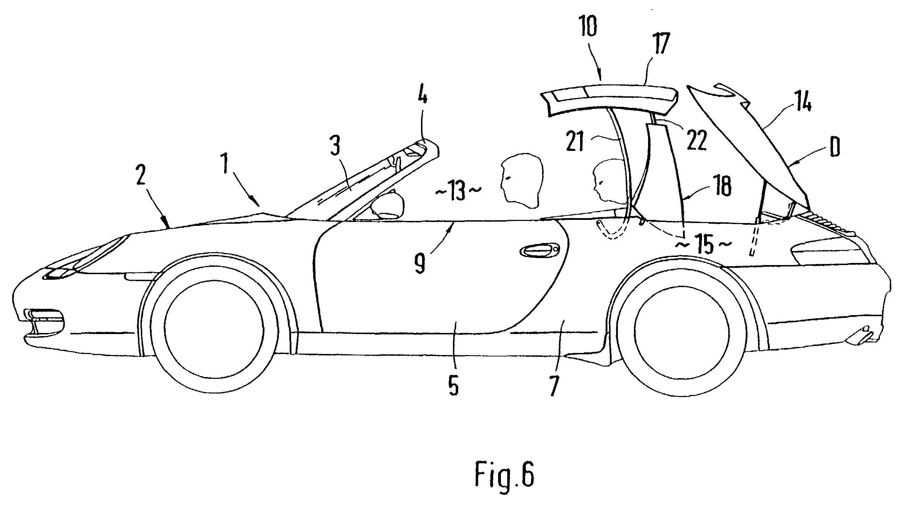

- Fig. 6: eine Seitenansicht auf den Personenkraftwagen und die Dachkonstruktion in einer Stellung gemäß Fig. 3,

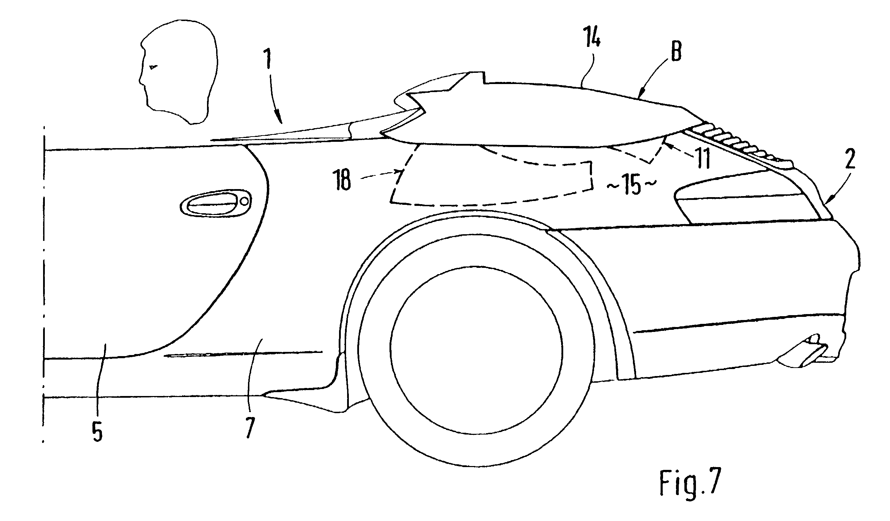

- Fig. 7: eine Seitenansicht auf den Personenkraftwagen und die Dachkonstruktion in einer Stellung gemäß Fig. 5,
- Fig. 8: eine perspektivische Teilansicht von schräg hinten auf die Dachkonstruktion und den heckseitigen Deckel,
- Fig. 9: einen Schnitt nach der Linie IX-IX der Fig. 1 in größerer Darstellung,
- Fig. 10: einen Schnitt nach der Linie X-X der Fig. 1 in größerer Darstellung,
- Fig. 11: einen Schnitt nach der Linie XI-XI der Fig. 1 in größerer Darstellung,
- Fig. 12: einen Schnitt nach der Linie XII-XII der Fig. 1 in größerer Darstellung,
- Fig. 13: einen Schnitt nach der Linie XIII-XIII der Fig. 1 in größerer Darstellung,
- Fig. 14: eine Teilseitenansicht der Dachkonstruktion in Schließstellung,
- Fig. 15: einen Schnitt entsprechend Fig. 9, jedoch in eingeklappter Lüftungsstellung F des Mittelteils,
- Fig. 16: einen Schnitt nach der Linie XVI-XVI der Fig. 2 in größerer Darstellung,

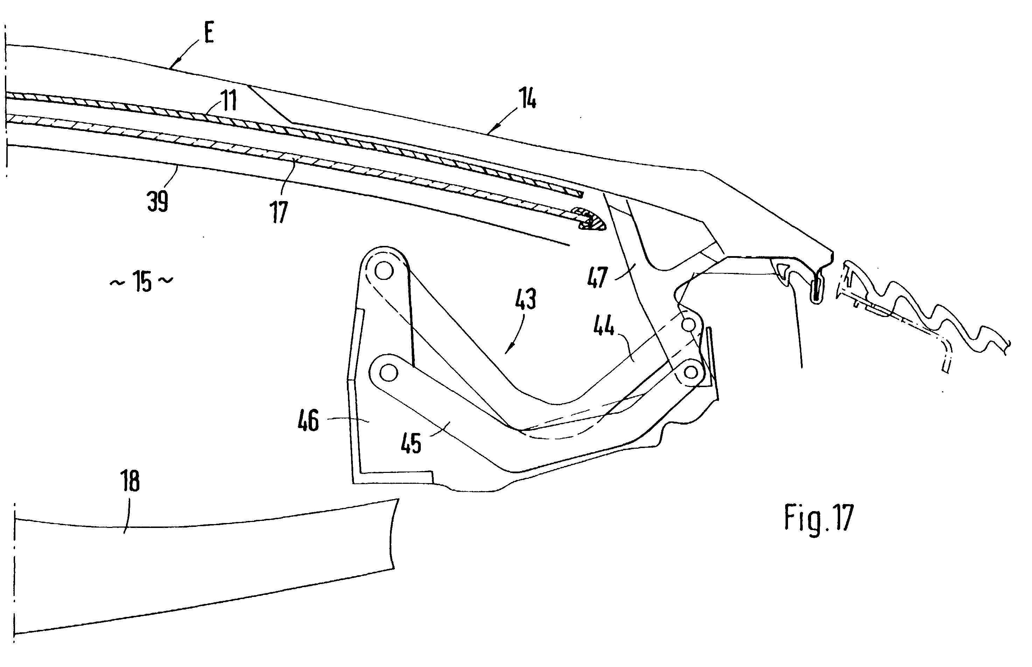

- Fig. 17: 7 eine Seitenansicht auf ein Viergelenkscharnier für den heckseitigen Deckel in geschlossener Stellung und abgelegter Dachkonstruktion in größerer Darstellung,

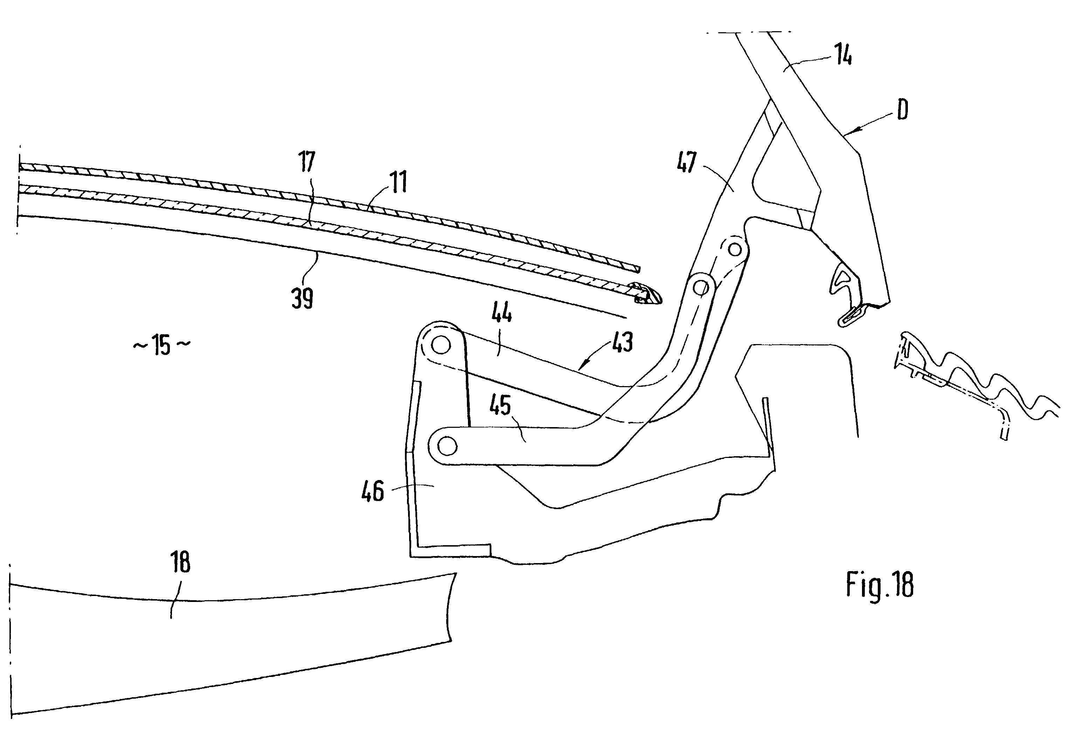

- Fig. 18: eine Seitenansicht ähnlich Fig. 17, jedoch mit geöffnetem Deckel, in größerer Darstellung,
- Fig. 19: eine Seitenansicht auf die Kinematik der Seitenteile in Schließstellung der Dachkonstruktion und
- Fig. 20: eine Seitenansicht auf die Kinematik der Seitenteile in Ablagestellung der Dachkonstruktion.

Ein durch einen Personenkraftwagen 1 gebildetes Kraftfahrzeug umfaßt einen feststehenden Aufbau 2 mit einem eine Windschutzscheibe 3 aufnehmenden Windschutzscheibenrahmen 4, seitlichen Türen 5 mit in Höhenrichtung verstellbaren Türfensterscheiben 6 und hintere Seitenteile 7. An die Türfensterscheiben 6 schließen sich nach hinten hin versenkbare oder abklappbare Fondfensterscheiben 8 an. Oberhalb einer Gürtellinie 9 des Aufbaus 2 ist eine versenkbare Dachkonstruktion 10 dargestellt, die zumindest ein über den Insassen angeordnetes Dachteil 11 und ein daran anschließendes Heckteil 12 umfaßt.

Die formsteife Dachkonstruktion ist von einer einen Fahrgastraum 13 vollständig überdeckenden Schließstellung A über Zwischenstellungen in eine heckseitige Ablagestellung B bewegbar und umgekehrt, wobei in der Ablagestellung B das Dachteil 11 und das Heckteil 12 in einem nach oben hin durch einen schwenkbaren Deckel 14 verschlossenen heckseitigen Aufnahmeraum 15 aufgenommen sind.

Erfindungsgemäß setzt sich das Heckteil 12 aus einem eine Heckscheibe 16 umfassenden großflächigen Mittelteil 17 und zwei beiderseits der Längsränder des Mittelteils 17 angeordneter Seitenteile 18 zusammen, wobei das Mittelteil 17 vollständig in das vorgelagerte Dachteil 11 einschiebbar und gemeinsam mit diesem bei geöffnetem Deckel 14 in den heckseitigen Aufnahmeraum 15 verlagerbar ist. Das in sich formsteife Dachteil 11 ist an seinen beiden Längsseiten 19 über je eine Viergelenkanordnung 20 am feststehenden Aufbau 2 abgestützt und von einer Schließstellung A in eine Ablagestellung B verschwenkbar und umgekehrt.

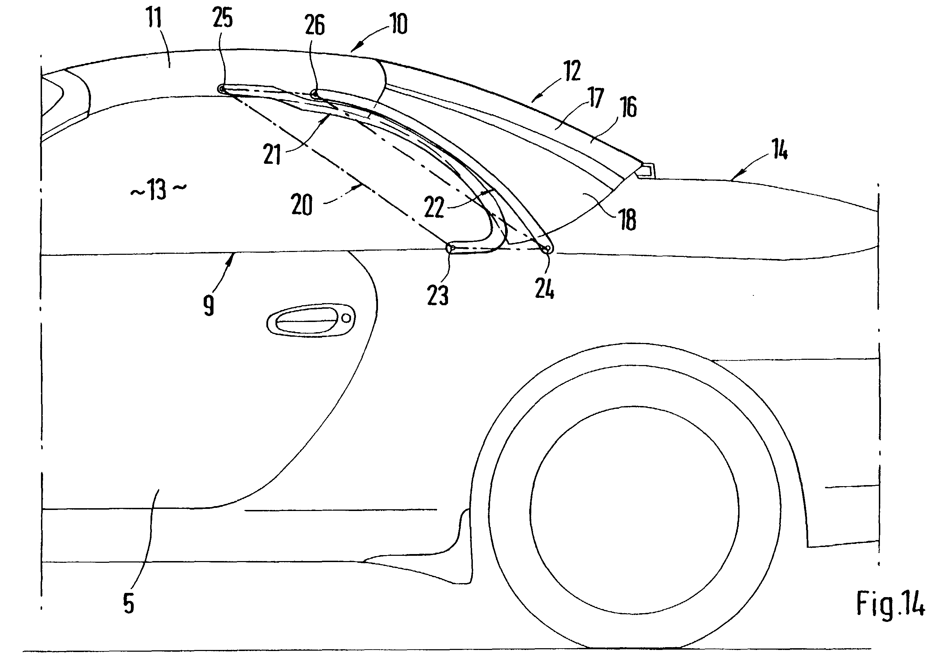

Jede Viergelenkanordnung 20 umfaßt zwei beabstandet angeordnete Lenker 21, 22. Die unteren Enden beider Lenker 21, 22 sind etwa in Höhe der Gürtellinie 9 und - in Fahrtrichtung gesehen - hinter den seitlichen Türen um querverlaufende, horizontale Drehachsen 23, 24 am feststehenden Aufbau 2 an Lagerböcken 52 schwenkbar angelenkt. Die oberen Enden beider Lenker 21, 22 sind mit einem hinteren bzw. mittleren Abschnitt der Längserstreckung des Dachteils 11 über querverlaufende horizontale Drehachse 25, 26 gelenkig verbunden (Fig. 14). In der Schließstellung A der Dachkonstruktion 10 folgen die beiden einen gebogenen Formverlauf aufweisenden Lenker 21, 22 etwa der Kontur des seitlichen Randes der Dachkonstruktion 10.

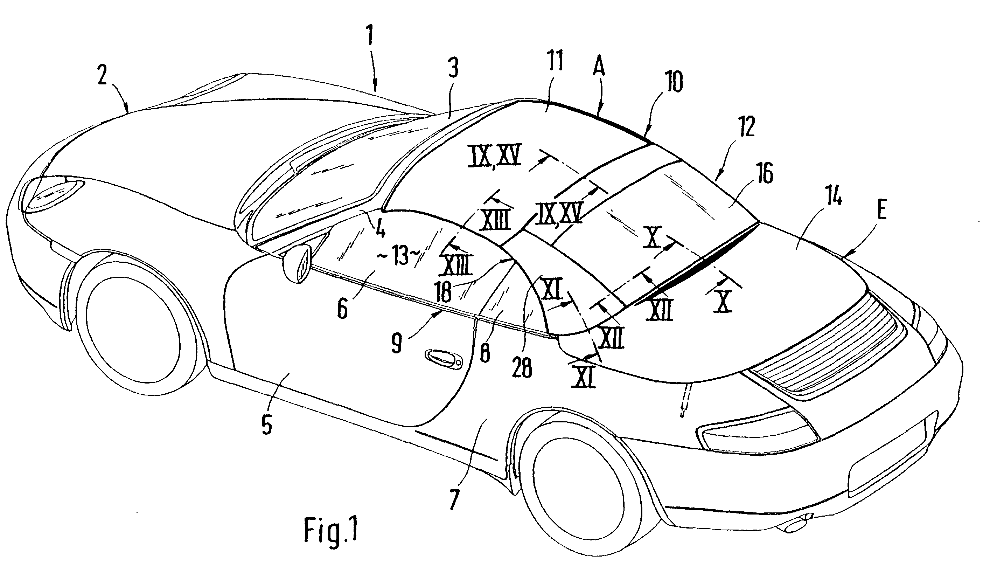

Das Mittelteil 17 des Heckteils 12 setzt sich im Ausführungsbeispiel aus der großflächigen Heckscheibe 16 und einem der Heckscheibe 16 vorgelagerten querverlaufenden schmalen Rahmenteil 27 zusammen, wobei Rahmenteil 27 und Heckscheibe 16 eine vorgefertigte Baueinheit bilden. Das Mittelteil 17 könnte aber auch nur durch eine Heckscheibe 16 dargestellt sein. Entsprechend Fig. 1 weist das Mittelteil 17 eine geringere Breite auf als das vorgelagerte Dachteil 11.

Jedes Seitenteil 18 des Heckteils 12 weist die Form eines C-Säulenabschnitts 28 auf, wobei sich jeder C-Säulenabschnitt 28 zwischen dem hinteren querverlaufenden Rand des Dachteils 11 und der angrenzenden, etwa in Höhe der Gürtellinie 9 verlaufenden heckseitigen Deckel 14 erstreckt. Der C-Säulenabschnitt 28 verbreitert sich vom Dachteil 11 zur Gürtellinie 9 hin kontinuierlich.

Jedes Seitenteil 18 des Heckteils 12 ist am jeweils hintenliegend angeordneten Lenker 22 der angrenzenden Viergelenkanordnung 20 klappbar befestigt und wird somit vom Lenker 22 getragen. An jedem Seitenteil 18 des Heckteils 12 und am vorgelagerten Dachteil 11 sind - in Längsrichtung gesehen - fluchtend angeordnete Führungsschienen 29, 30 angeordnet, wobei abgestellte Führungselemente 31, 32 des Mittelteils 17 mit diesen Führungsschienen 29, 30 in Wirkverbindung stehen.

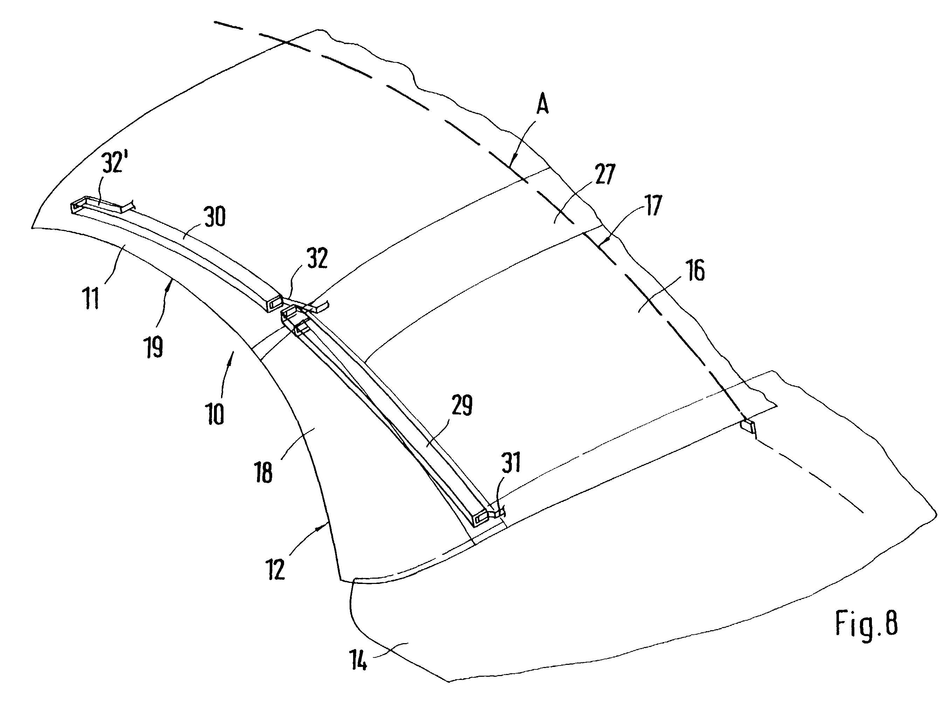

In seitlich außenliegenden, oberen Randbereichen des Mittelteils 17 sind obere Führungselemente 32 vorgesehen, die sich vom Mittelteil 17 in Richtung Dachteil 11 und nach außen hin erstrecken, wobei diese Führungselemente 32 stets mit den am Dachteil 11 angebrachten Führungsschienen 30 zusammenwirken. Bei geschlossenem Heckteil 12 befinden sich die oberen Führungselemente 32 des Mittelteils 17 in einem hintenliegenden Endbereich der dachteilseitigen Führungsschienen 30. Beim nach vorne Schieben des Mittelteils 17 unter das Dachteil 11 bewegen sich die vorderen Führungselemente 32 in die dachteilseitigen Führungsschienen 30 nach vorne und nehmen die Stellung 32' ein (Fig. 8).

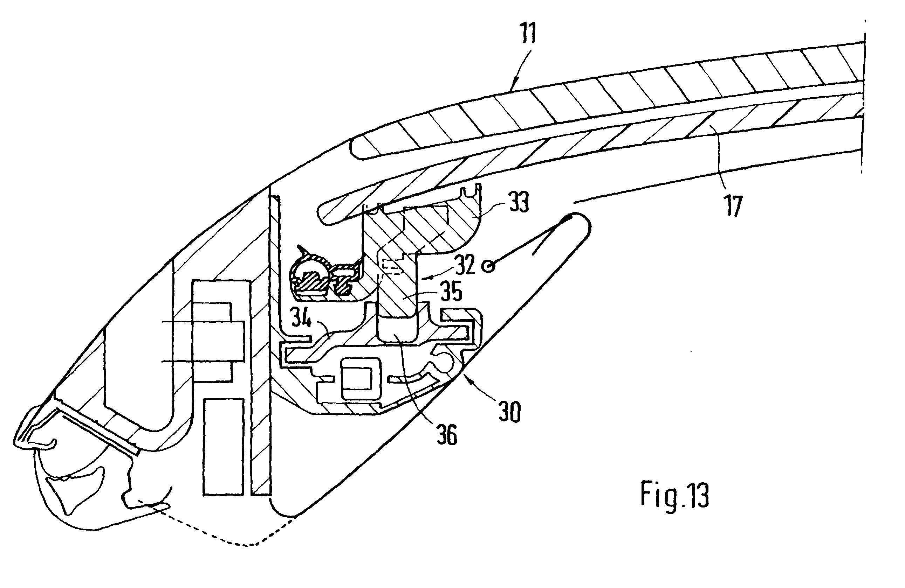

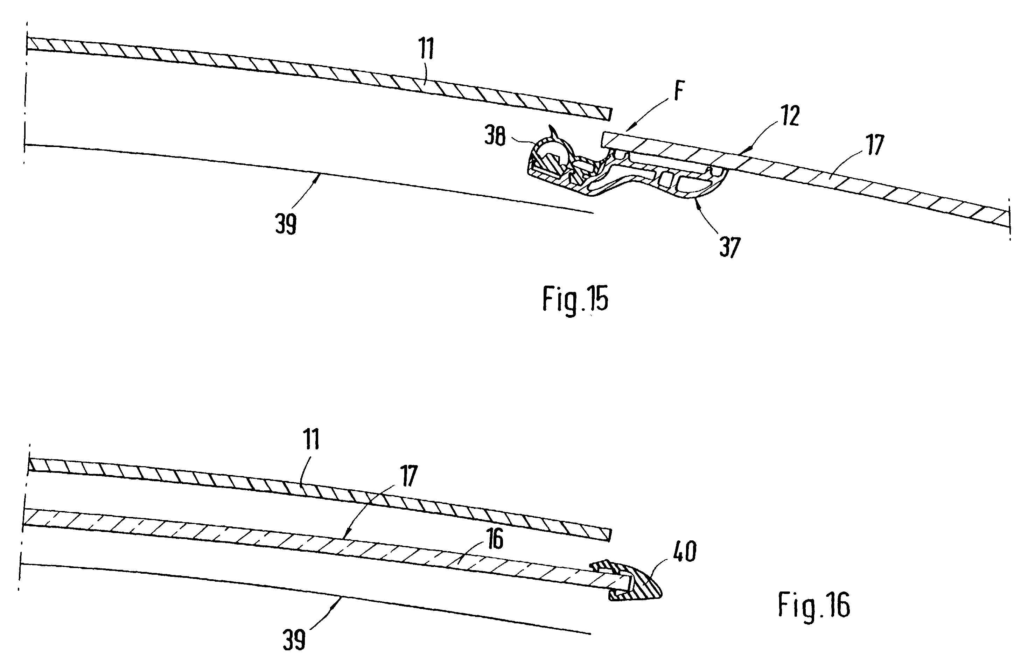

Die in seitlich außenliegenden unteren Randbereichen des Mittelteils 17 angeordneten unteren Führungselemente 31 greifen bei geschlossenem Heckteil 12 in die an den Seitenteilen 18 angebrachten Führungsschienen 29 ein. Beim Bewegen des Mittelteils 17 nach vorne wandern die Führungselemente 31 entlang der heckteilseitigen Führungsschienen 29 nach oben, bis sie schließlich in die dachteilseitigen Führungsschienen 30 verlagert werden. Vor dem Einschieben des Mittelteils 17 in das vorgelagerte Dachteil 11 ist das Mittelteil 17 mit seinem oberen Rand nach innen in eine Lüftungsstellung F einklappbar (Fig. 15). Um dies zu ermöglichen sind die vorderen Führungselemente 32 jeweils zweiteilig ausgebildet. Das eine Teil 33 ist fest mit dem Mittelteil 17 verbunden, wogegen das andere Teil 34 in der Führungsschiene 30 geführt ist. Ein abgestellter Steg 35 des am Mittelteil 17 befestigten Teils 33 greift dabei in eine korrespondierende Ausnehmung 36 des anderen Teils ein, wobei eine definierte Relativbewegung in Höhenrichtung (Fig. 13) gewährleistet ist.

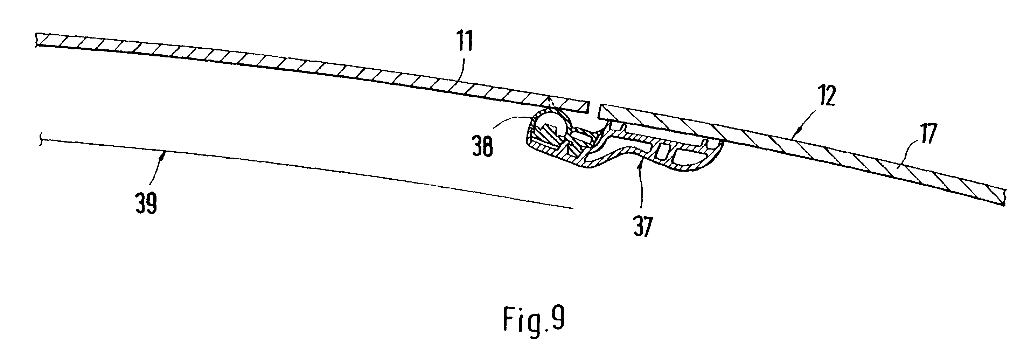

Aus Fig. 9 ist ersichtlich, daß das Dachteil 11 und das Heckteil 12 in Schließstellung A oberflächenbündig aneinandergesetzt sind. Am vorderen Rand des Mittelteils 17 des Heckteils 12 ist innenseitig ein Verstärkungsrahmen 37 vorgesehen, der einen Dichtkörper 38 trägt, wobei der Dichtkörper 38 das vorneliegende Dachteil 11 untergreift. Ferner ist in Fig. 9 ein etwa parallel und mit Abstand zum darüberliegenden Dachteil 11 verlaufender Innenhimmel 39 dargestellt, wobei im dazwischenliegenden Raum das Mittelteil 17 aufnehmbar ist.

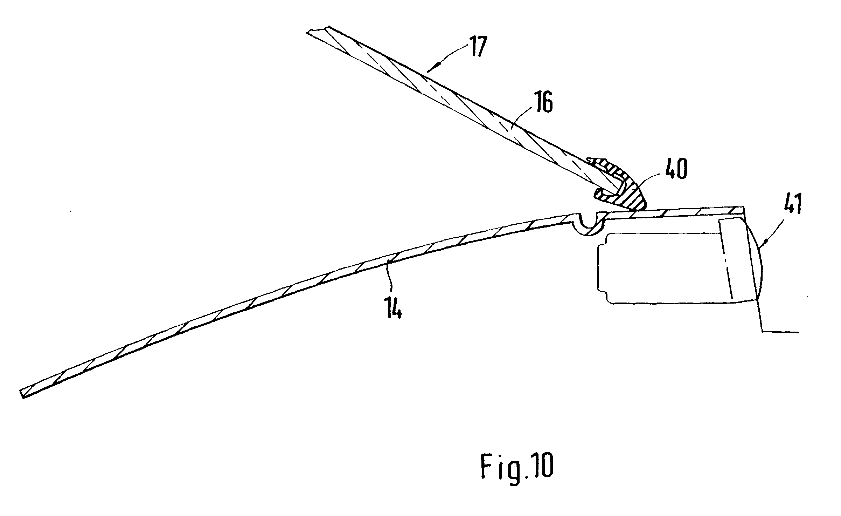

Fig. 10 zeigt den unteren, mit einem aufgesteckten Dichtkörper 40 versehenen Rand der Heckscheibe 16, der von außen auf den heckseitigen Deckel 14 aufgesetzt ist. Der Deckel 14 kann zwischen den beiden Seitenteilen 18 unterhalb der Heckscheibe 16 nach vorne gezogen sein. Unterhalb des unteren Randes der Heckscheibe 16 ist am Deckel 14 in einem mittleren Bereich eine Zusatzbremsleuchte 41 angeordnet.

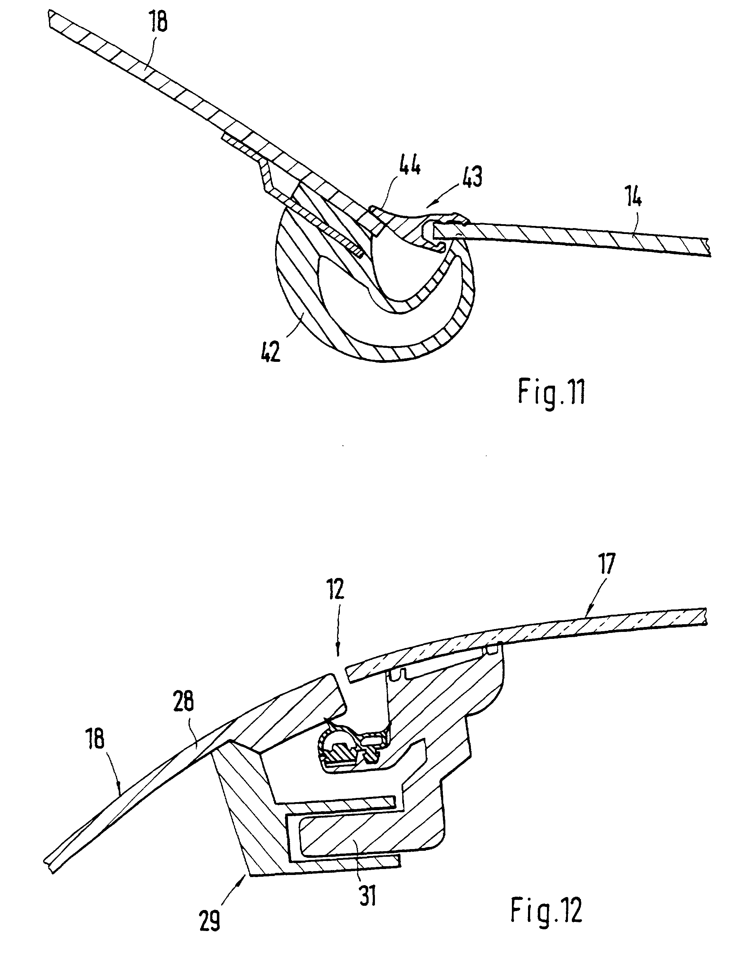

Im Verbindungsbereich Seitenteil 18 mit Klappe 14 trägt das Seitenteil 18 einen innenliegenden schlauchförmigen Dichtkörper 42, der die Klappe 14 abschnittsweise untergreift. Eine randseitig der Klappe 14 aufgesteckte Dichtung 43 stützt sich mit einer Lippe 44 außenseitig am angrenzenden Rand des Seitenteils 18 ab (Fig. 11).

In Schließstellung A der Dachkonstruktion 10 ist das Dachteil 11 am angrenzenden Windschutzscheibenrahmen 4 über eine nicht näher gezeigte lösbare Verriegelungseinrichtung in Lage gehalten. Der Antrieb und die Entriegelung der Dachkonstruktion 10 erfolgen vorzugsweise motorisch. Durch Betätigen eines nicht näher dargestellten Bedienschalters wird in einem ersten Schritt das Mittelteil 17 im oberen Bereich nach innen in eine Belüftungsstellung (nicht näher dargestellt) eingeklappt. Durch nochmaliges Drücken des Bedienschalters wird das Mittelteil 17 über die Führungsschienen 29, 30 nach vorne unter das Dachteil 11 eingeschoben, so daß eine relativ großflächige Hecköffnung (Stellung C) vorhanden ist.

Soll die Dachkonstruktion 10 komplett in den heckseitigen Aufnahmeraum 15 verbracht werden, so wird die Verriegelung im Windschutzscheibenrahmen 4 gelöst und der heckseitige Deckel 14 wird in sein Öffnungsstellung D hochgeschwenkt. Der Deckel 14 ist im hinteren Bereich über Viergelenkscharniere 43 schwenkbar mit dem Aufbau 2 verbunden. Jedes Viergelenkscharnier 43 umfaßt gebogene Lenker 44, 45, die einerseits mit einem Lagerbock 46 und andererseits einer Konsole 47 des Deckels gelenkig verbunden sind.

Danach wird das Dachteil 11 mit dem eingeschobenen Mittelteil 17 aus der Schließstellung A über Zwischenstellungen in die heckseitige Ablagestellung B verschwenkt und anschließend wird der Deckel 14 wieder in seine geschlossene Stellung E zurückverlagert.

Damit die Seitenteile 18 des Heckteils 12 in der Ablagestellung B nicht in Kontakt mit den angrenzenden aufbauseitigen Radhäusern gelangen, kann zwischen den Seitenteilen 18 und den sie tragenden Lenkern 22 eine nicht näher dargestellte Kinematik vorgesehen sein, mittels der ein seitliches Einschwenken der Seitenteile 18 ermöglicht wird.

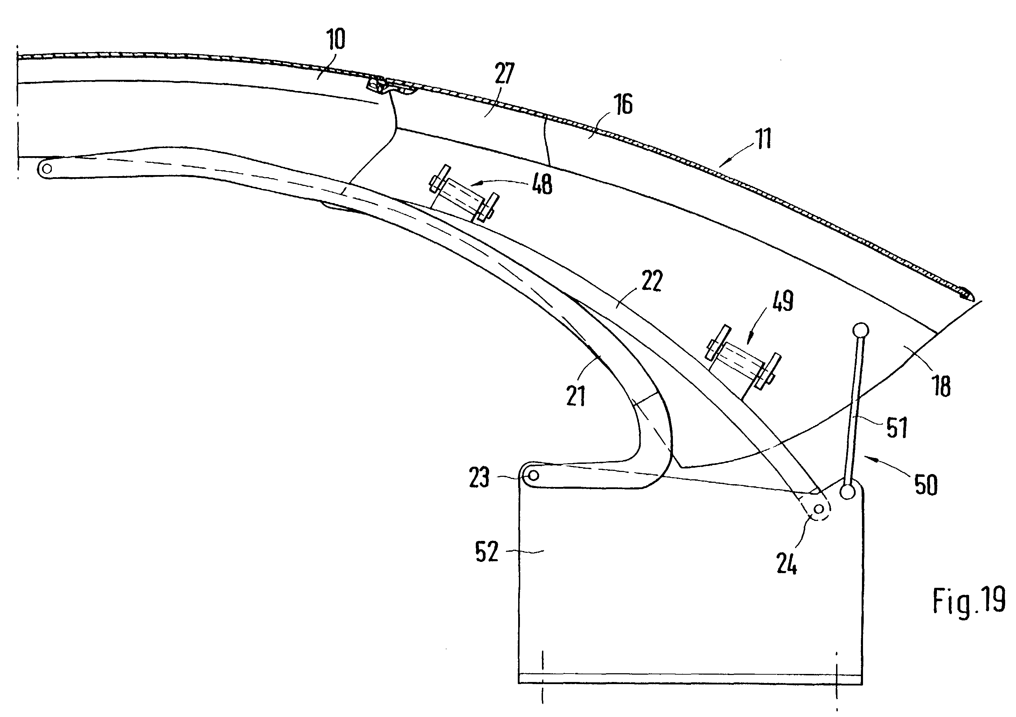

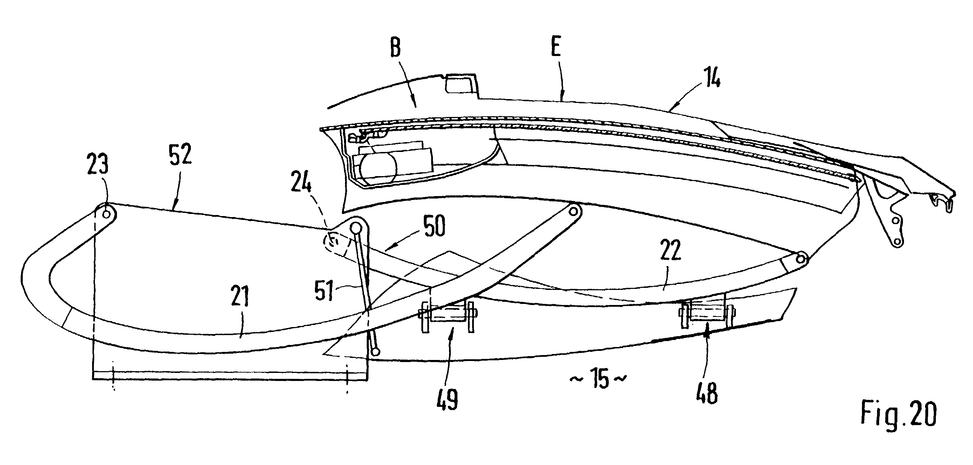

Gemäß den Fig. 19 und 20 ist jedes Seitenteil 18 über zwei beabstandet angeordnete Scharniere 48, 49 mit dem angrenzenden Lenker 22 verbunden. Zudem umfaßt die Kinematik 50 einen Verstellenker 51, dessen eines Ende an einem Lagerbock 52 und dessen anderes Ende am Seitenteil 18 nach Art eines Kugelgelenks angeschlossen ist. Durch den Verstellenker 51 wird das jeweilige Seitenteil 18 zwangsweise nach innen oben geklappt.

## Patentansprüche

1. Kraftfahrzeug mit einer versenkbaren Dachkonstruktion (10), die zumindest ein über den Insassen angeordnetes Dachteil (11) und ein eine Heckscheibe (16) aufweisendes Heckteil (12) umfaßt, wobei die Dachkonstruktion (10) von einer einen Fahrgastraum (13) überdeckenden Schließstellung in eine heckseitige Ablagestellung (B) bewegbar ist, in der das Heckteil (12) und das Dachteil (11) in einem nach oben hin durch einen schwenkbaren Deckel (14) verschlossenen heckseitigen Aufnahmeraum (15) aufgenommen sind, dadurch gekennzeichnet, daß das Heckteil (12) aus einem die Heckscheibe (16) umfassenden Mittelteil (17) und zwei Seitenteilen (18) zusammengesetzt ist, wobei das Mittelteil (17) in das vorgelagerte Dachteil (11) einschiebbar und gemeinsam mit diesem bei geöffnetem Deckel (14) in den heckseitigen Aufnahmeraum (15) verlagerbar ist.

2. Kraftfahrzeug nach Anspruch 1, dadurch gekennzeichnet, daß das Dachteil (11) an seinen beiden Längsseiten über je eine Viergelenkanordnung (20) am feststehenden Aufbau (2) abgestützt ist.

3. Kraftfahrzeug nach Anspruch 2, dadurch gekennzeichnet, daß jede Viergelenkanordnung (20) zwei beabstandet angeordnete Lenker (21, 22) umfaßt, deren eine Enden mit dem Dachteil (11) und deren andere Enden mit dem feststehenden Aufbau (2) drehbar verbunden sind.

4. Kraftfahrzeug nach Anspruch 1, dadurch gekennzeichnet, daß das Mittelteil (17) eine großflächige Heckscheibe (16) und ein der Heckscheibe (16) vorgelagertes querverlaufendes Rahmenteil (27) umfaßt, wobei die Heckscheibe (16) und das Rahmenteil (27) eine vorgefertigte Baueinheit bilden.

5. Kraftfahrzeug nach Anspruch 1, dadurch gekennzeichnet, daß jedes Seitenteil (18) des Heckteils (12) die Form eines C-Säulenabschnitts (28) aufweist, wobei sich jeder C-Säulenabschnitt (28) zwischen dem hinteren Rand des Dachteils (11) und dem angrenzenden, etwa in Höhe der Gürtellinie (9) verlaufenden heckseitigen Deckel (14) erstreckt.

6. Kraftfahrzeug nach einem der vorangegangenen Ansprüche, dadurch gekennzeichnet, daß jedes Seitenteil (18) des Heckteils (12) am hintenliegend angeordneten Lenker (22) der angrenzenden Viergelenkanordnung (20) befestigt ist und von diesem getragen wird.

7. Kraftfahrzeug nach einem der vorangegangenen Ansprüche, dadurch gekennzeichnet, daß an jedem Seitenteil (18) des Heckteils (12) und am vorgelagerten Dachteil (11) fluchtend angeordnete Führungsschienen (29, 30) angeordnet sind, wobei abgestellte Führungselemente (31, 32) des Mittelteils (17) mit diesen Führungsschienen (29, 30) in Wirkverbindung stehen.

8. Kraftfahrzeug nach einem der vorangegangenen Ansprüche, dadurch gekennzeichnet, daß die in einem oberen Randbereich des Mittelteils (17) ausgebildeten oberen Führungselemente (32) stets mit den am Dachteil (11) angebrachten Führungsschienen (30) zusammenwirken.

9. Kraftfahrzeug nach einem der vorangegangenen Ansprüche, dadurch gekennzeichnet, daß die in einem unteren, seitlichen Randbereich des Mittelteils (17) angeordneten Führungselemente (31) bei geschlossenem Heckteil (12) mit den Führungsschienen (29) der Seitenteile (18) und bei nach vorne in das Dachteil (11) verlagertem Mittelteil (17) mit den Führungsschienen (30) des Dachteils (11) zusammenwirken.

10. Kraftfahrzeug nach einem der vorangegangenen Ansprüche, dadurch gekennzeichnet, daß vor dem Einschieben des Mittelteils (17) in das vorgelagerte Dachteil (11) das Mittelteil (17) nach innen hin in eine Lüftungsstellung einklappbar ist.

11. Kraftfahrzeug nach einem der vorangegangenen Ansprüche, dadurch gekennzeichnet, daß die Seitenteile (18) beim Ablegen der Dachkonstruktion (10) in den heckseitigen Aufnahmeraum (15) mittels einer Kinematik nach innen einschwenkbar sind.

## Claims

1. A motor vehicle with a foldable roof structure (10) comprising at least one roof part (11) situated above the occupants and a rear part (12) having a rear window (16), wherein the roof structure (10) is movable from a closed position covering a passenger compartment (13) into a folded-down position (**B**) at the rear in which the rear part (12) and the roof part (11) are received in a rear receiving space (15) closed at the top by a pivotable cover (14), **characterized in that** the rear part (12) is formed by a middle part (17) comprising the rear window (16) and two lateral parts (18), wherein the middle part (17) is insertable into the roof part (11) mounted in front and is displaceable jointly therewith into the receiving space (15) at the rear when the cover (14) is opened.

2. A motor vehicle according to Claim 1. **characterized in that** the roof part (11) is supported at the two longitudinal sides thereof on the fixed body (2) by way of a respective four-joint arrangement (20).

3. A motor vehicle according to Claim 2, **characterized in that** each four-joint arrangement (20) comprises two spaced control arms (21, 22), of which the first ends are rotatably connected to the roof part (11) and the other ends to the fixed body (2).

4. A motor vehicle according to Claim 1, **characterized in that** the middle part (17) comprises a rear window (16) of large area and a transversely extending frame part (27) mounted in front of the rear window (16). wherein the rear window (16) and the frame part (27) form a pre-fabricated structural unit.

5. A motor vehicle according to Claim 1. **characterized in that** each lateral part (18) of the rear part (12) is in the form of a C-pillar portion (28), wherein each C-pillar portion (28) extends between the rear edge of the roof part (11) and the adjacent rear cover (14) extending substantially at the level of the waist line (9).

6. A motor vehicle according to one of the preceding Claims, **characterized in that** each lateral part (18) of the rear part (12) is secured to the rear-situated control arm (22) of the adjacent four-joint arrangement (20) and is supported thereby.

7. A motor vehicle according to one of the preceding Claims, **characterized in that** guide rails (29, 30) arranged in alignment are arranged on each lateral part (18) of the rear part (12) and on the forward-mounted roof part (11), wherein projecting guide members (31, 32) of the middle part (17) are operatively connected to the said guide rails (29, 30).

8. A motor vehicle according to one of the preceding Claims, **characterized in that** the upper guide members (32) formed in an upper edge area of the middle part (17) constantly cooperate with the guide rails (30) attached to the roof part (11).

9. A motor vehicle according to one of the preceding Claims, **characterized in that** the guide members (31) arranged in a lower lateral edge region of the middle part (17) cooperate with the guide rails (29) of the lateral parts (18) when the rear part (12) is closed and with the guide rails (30) of the roof part (11) when the middle part (17) is displaced forwards into the roof part (11).

10. A motor vehicle according to one of the preceding Claims, **characterized in that** before the middle part (17) is inserted into the forward-mounted roof part (11) the middle part (17) is retractable inwards into a ventilation position.

11. A motor vehicle according to one of the preceding Claims, **characterized in that** when the roof structure (10) is folded down the lateral parts (18) are pivotable inwards into the receiving space (15) at the rear by means of a kinematic arrangement.

## Revendications

1. Véhicule automobile comportant une structure de toit (10) escamotable, qui comprend au moins une partie de toit (11) disposée au-dessus des passagers et une partie arrière (12) comportant une vitre arrière (16), la structure de toit (10) étant déplaçable d'une position de fermeture, qui recouvre un habitacle (13), dans une position de rangement arrière (B), dans laquelle la partie arrière (12) et la partie de toit (11) sont logées dans un compartiment de réception arrière (15) fermé vers le haut par un capot (14) pivotant, caractérisé en ce que la partie arrière (12) est composée d'une partie centrale (17) comprenant la vitre arrière (16) et de deux parties latérales (18), la partie centrale (17) pouvant être introduite dans la partie de toit (11) placée devant et étant déplaçable avec celle-ci dans le compartiment de réception arrière (15), lorsque le capot (14) est ouvert.

2. Véhicule automobile selon la revendication 1, caractérisé en ce que la partie de toit (11) est soutenue sur chacun de ses côtés longitudinaux par un quadrilatère articulé (20), sur la carrosserie (2) fixe.

3. Véhicule automobile selon la revendication 2, caractérisé en ce que chaque quadrilatère articulé (20) comprend deux bras oscillants (21, 22) disposés espacés, dont une extrémité est reliée à rotation à la partie de toit (11) et l'autre extrémité, à la carrosserie (2) fixe.

4. Véhicule automobile selon la revendication 1, caractérisé en ce que la partie centrale (17) comprend une vitre arrière (16) à grande surface et une partie de cadre (27) s'étendant transversalement, placée devant la vitre arrière (16), la vitre arrière (16) et la partie de cadre (27) formant un ensemble préfabriqué.

5. Véhicule automobile selon la revendication 1, caractérisé en ce que chaque partie latérale (18) de la partie arrière (12) a la forme d'une portion de montant C (28), chaque portion de montant C (28) s'étendant entre le bord arrière de la partie de toit (11) et le capot arrière (14) adjacent, qui s'étend à peu près à hauteur de la ligne médiane (9).

6. Véhicule automobile selon l'une des revendications précédentes, caractérisé en ce que chaque partie latérale (18) de la partie de toit (12) est fixée au bras oscillant (22) disposé derrière, du quadrilatère articulé (20) adjacent et est supporté par ce bras oscillant.

7. Véhicule automobile selon l'une des revendications précédentes, caractérisé en ce que des rails de guidage (29, 30) alignés sont disposés sur chaque partie latérale (18) de la partie arrière (12) et sur la partie de toit (11) placée devant, des éléments de guidage (31, 32) faisant saillie de la partie centrale (17) étant en liaison active avec ces rails de guidage (29, 30).

8. Véhicule automobile selon l'une des revendications précédentes, caractérisé en ce que les éléments de guidage supérieurs (32), formés dans une zone de bordure supérieure de la partie centrale (17), coopèrent toujours avec les rails de guidage (30) fixés à la partie de toit (11).

9. Véhicule automobile selon l'une des revendications précédentes, caractérisé en ce que les éléments de guidage (31), disposés dans une zone de bordure latérale inférieure de la partie centrale (17), coopèrent avec les rails de guidage (29) des parties latérales (18), lorsque la partie arrière (12) est fermée, et coopèrent avec les rails de guidage (30) de la partie de toit (11), lorsque la partie centrale (17) est déplacée vers l'avant dans la partie de toit (11).

10. Véhicule automobile selon l'une des revendications précédentes, caractérisé en ce que la partie centrale (17) peut être rabattue vers l'intérieur dans une position d'aération, avant d'être introduite dans la partie de toit (11) placée devant.

11. Véhicule automobile selon l'une des revendications précédentes, caractérisé en ce que les parties latérales (18) peuvent être pivotées vers l'intérieur au moyen d'une cinématique, lorsque la structure de toit (10) est rangée dans le compartiment de réception arrière (15).
